# EUROPEAN PATENT APPLICATION

(11) **EP 3 361 719 A1**
(43) Date of publication of application: **15.08.2018**
(21) Application number: 18152367.1
(22) Date of filing: 18.01.2018
(51) Int. Cl.: H04N 5/225, G02B 17/06, H04N 5/232, H04N 5/272

(54) **LONG-RANGE VIEWING APPARATUS**

(30) Priority: 08.02.2017 GB 201702094
(71) Applicant: Sesanti Ltd, Weyhill, Hampshire SP11 0ST (GB)
(72) Inventor: BATES, Andrew James, Weyhill, Hampshire SP11 0ST (GB)
(74) Representative: Chapman IP

(57) **Abstract**

A long-range viewing apparatus is described, the long-range viewing apparatus arranged to provide an all-in-one solution to combining two videos streams obtained coaxially through a single imaging aperture. A long-range viewing apparatus comprising, a housing; a first camera within the housing; a second camera within the housing; and a processing element; wherein the processing element is arranged to combine images from the first and second cameras; wherein the processing element is further arranged to scale images from the first and second cameras; wherein the processing element is further arranged to crop images from the first and second cameras; characterised in that, the first camera is positioned coaxially in front of the second camera; and the housing comprises a single imaging aperture. The invention aims to achieve real-time digital foveal zoom capabilities in a physically robust, low-weight, low-complexity and small form factor assembly suitable for demanding applications.

## Description

### Field of the Invention

The present invention relates to a long-range viewing apparatus, in particular a long-range viewing apparatus providing coaxial digital foveal zoom capabilities.

### Background to the Invention

Conventional zoom lens systems utilize a lens assembly providing a variable focal length and therefore give the user the benefit of being able to dynamically adjust the field of view of a camera system. This optical zoom technology typically uses a plurality of lenses within a housing, wherein the positioning of the lenses within the housing may be adjusted to provide for the varying of the focal length. Focussing upon a desired point is therefore provided for in conventional zoom technology.

There are, however, a number of drawbacks to the more traditional zooming systems. A primary drawback to this technology is the level of complexity inherent in having a system comprising a number of moving parts. Complex optical zoom systems can comprise upwards of thirty individual lens elements. The quality of the features available in such technology is very high, but there are a limited number of uses. Added to the complexity is the consequent weight of these lens systems. When combined with the natural tendency for such complex technology to suffer reduced ruggedness in field applications, these two factors are prohibitive to its use in, for example, some demanding applications. The presence of moving parts can also act as an additional source of sound, particularly when such moving parts are motorised. This is not acceptable for highly sensitive environments, where sound levels are critical. Most, if not all lens systems of this type comprise a single imaging aperture which means that applying an optical zoom causes a reduction in knowledge of activity peripheral to the point of focus. This can prove to be a hindrance, particularly when attempting to maintain a perspective of peripheral activity while locating a desired entity in the distance.

Foveal vision is the way in which animal (including human) vision works, and comprises a single focussed viewpoint while providing additional peripheral visual information. This natural system has been replicated in technological visual systems. Implementations are described in, for example, US7965314 (B1) and US2002057279 (A1).

Currently available foveal vision technology comprises the use of multiple camera systems which tend to be used in a side-by-side configuration utilizing multiple imaging apertures. Such camera systems tend to combine images from lenses with different fields-of-view, resulting in a composite image similar to that produced by the eye. Such an image has advantages in that a small area of desired image data is available in full resolution but maintains the wider context of the surrounding field of view. This proves useful not only in remaining aware of the views immediately outside of those in full resolution but also providing that information in a smaller, more easily processed digital file size. This requires less computationally intensive operations to obtain and store images where the desired information is provided in a wider visual context. This requires smaller and less expensive processing equipment to achieve than if the image provided was one where the entire image was in full resolution.

There do, however, remain a number of limitations to the currently available forms of foveal vision technology. It is therefore desirable to provide an enhanced apparatus for long-range viewing that enables easy location of, and focussing on a desired entity using a single imaging aperture, and without the use of internal moving parts. It is also desirable that, by comparison with the currently available technology, a long-range viewing apparatus is provided with reduced complexity of hardware, wherein the hardware used is of reduced size and weight.

### Summary of the invention

In accordance with a first aspect of the present invention, there is provided a long-range viewing apparatus comprising, a housing; a first camera within the housing; a second camera within the housing; and a processing element; wherein the processing element is arranged to combine images from the first and second cameras; wherein the processing element is further arranged to scale images from the first and second cameras; wherein the processing element is further arranged to crop images from the first and second cameras; characterised in that, the first camera is positioned coaxially in front of the second camera; and the housing comprises a single imaging aperture.

Where multiple cameras are used in a side-by-side configuration in current forms of foveal vision technology, this requires multiple imaging apertures and larger product size. Multiple imaging apertures can also carry with it a further disadvantage in the increased amount of glare created by reflected light. One of the most critical disadvantages to the use of multiple imaging apertures is, however, the high incidence of parallax errors.

The invention provides two cameras in a coaxial configuration allowing for the housing to comprise a single imaging aperture. By comparison to currently available digital foveal zoom technology, which through necessity comprises multiple imaging apertures, glare from reflected light is reduced due to the reduction in reflective surfaces. By comparison to other single imaging aperture zoom technology, which comprises more conventional systems, there are no moving lens mechanisms, thus not only reducing residual noise inevitable from such mechanisms, but also reducing the complexity of the hardware. A reduction in hardware complexity through the lack of moving lens mechanisms also provides for more rugged equipment that is less sensitive to harsh treatment such as may be experienced during demanding applications. The smaller form factor resulting from a coaxial configuration leads to easily portable and manhandleable equipment. Perhaps most importantly, the coaxial arrangement of the first and second cameras of the present invention eliminates the incidence of parallax errors, enabling safer use in demanding applications. The processing element, used to combine image data from the first and second cameras, can optionally be used to crop and scale the image data prior to combination, providing a digital zoom function. This digital zoom provides a silent alternative to more conventional optical zoom technology that is more robust to rough physical handling.

In a preferred embodiment, the first camera of the present invention comprises a first camera lens assembly and a first camera sensor. Also comprised within a preferred embodiment, the second camera comprises a second camera lens assembly, a second camera sensor and at least one mirror.

The camera system of the present invention preferably comprises one of the catadioptric variety, thus incorporating both reflective and refractive imaging technology. In this way, the incorporation of a coaxial orientation of the first and second camera means that the central obstruction present within the catadioptric second camera can be occupied by the first camera.

Preferably the combination of images from the first and second cameras by the processing element provides a composite foveal image.

Foveal vision, in mimicking animal vision, invariably provides a high-resolution central region coupled with information relating to the periphery of the high-resolution central region. This enables the high-resolution central region to remain in the context of the surrounding environment enabling easier location of a desired entity without the need for extensive scanning of the peripheral field of view. A potential additional benefit of the foveal vision employed in a preferred embodiment of the present invention is that the combination of high quality image data from the second camera with what may optionally be lower quality image data from the first camera provides for lower complexity of the combined image data. The processing of this combined data would be less computationally intensive than if the image data taken of the same desired entity and peripheral field of view was composed entirely of high quality image data provided by the second camera.

Preferably, the first camera is a wide field of view camera and the second camera is a narrow field of view camera.

The preferred embodiment suits the provision of foveal vision by the incorporation of both wide field of view image data and high-resolution narrow field of view image data.

In a preferred embodiment the scaling and cropping of images by the processing element provides zoom capability without internally moving parts.

The absence of internally moving parts provides for a lower complexity apparatus which is inherently more robust to physically harsh applications. Moving parts naturally provide energy output in the form of sound or heat in real-world setting, providing a disadvantage in covert applications. The absence therefore of internally moving parts makes the apparatus of the present invention more suitable to such applications.

Preferably the apparatus further comprises a display means, wherein the processing element is arranged to provide image data to the display means which in-turn is enabled to receive and the display the image data.

The real-time updated display of imaging using the present invention, with additional zoom capability, provides for a complete coaxial digital foveal zoom camera system.

Preferably the processing element is further arranged to transmit and receive image data across at least one network.

The resulting image data provided from the apparatus in a preferred embodiment may be transmitted to a display means, to a network or both. Optionally the transmission or receipt of image data from a network may occur prior to the combination, cropping or scaling of the image data. Alternatively, the image data may be combined, cropped or scaled prior to transmission or receipt from a network. Where the preferred embodiment comprises a display means, the image data may be transmitted or received from a network prior to transmission to the display means. Alternatively, the image data may be transmitted to the display means prior to, or at the same time as transmission or receipt of the image data from a network.

### Detailed Description

Specific embodiments will now be described by way of example only, and with reference to the accompanying drawings, in which:
Figure 1 shows a schematic view of a preferred embodiment of a long-range viewing apparatus according to a first aspect of the present invention;
Figure 2a-c show iteratively zoomed example images output from a long-range viewing apparatus of Figure 1; and
Figure 3 shows the long-range viewing apparatus of Figure 1 further comprising a display means.

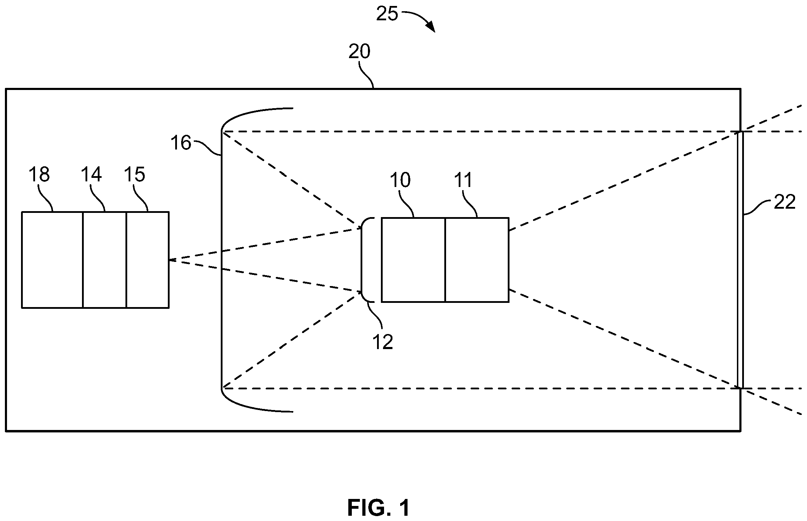

Referring to Figure 1, a schematic view is provided in which there is illustrated a long-range viewing apparatus 25 in accordance with a first embodiment of the invention, enabling all-in-one coaxial digital foveal imaging and zoom functionality.

The apparatus 25 comprises a substantially rectangular housing 20, with a single imaging aperture 22 in a side face. The aperture 22 provides for transit of light accessible to a first camera sensor 10 through a therein combined first camera lens assembly 11 (a first camera); and a second camera sensor 14 through a therein combined second camera lens assembly 15; each disposed within the housing. The first camera 10, 11 and second camera sensor 14 are shown aligned coaxially along the longitudinal axis of the housing 20, each oriented facing the aperture 22. The first camera sensor 10, 11 is disposed against the rear-side face of a second mirror 12 which comprises a portion of the second camera. The second camera sensor 14 is positioned coaxially behind the front first camera sensor 10. A first mirror 16 is positioned within the housing 20 and oriented to provide reflection of light from the aperture 22 to the second mirror 12, which is positioned so as to receive the light reflected from the first mirror 16 and to reflect the light toward the second camera sensor 14 through the second camera lens assembly 15. Together, the first mirror 16, the second mirror 12, the second camera sensor 14 and the second camera lens assembly 15 are arranged to provide a complete catadioptric second camera.

The first camera 10, 11 comprises a wide field of view camera. The second camera 12, 14, 15, 16 comprises a narrow field of view camera.

Preferably the apparatus 25 further comprises a processing element 18, shown disposed behind the second camera sensor 14. Optional embodiments will be conceivable wherein the processing portion is not disposed behind the second camera sensor 14, but may be disposed elsewhere within or around the housing 20. In additional optional embodiments it is conceivable that the invention may comprise more than one processing element 18. In additional conceivable embodiments the processing element 18 may be comprised within one or more cameras.

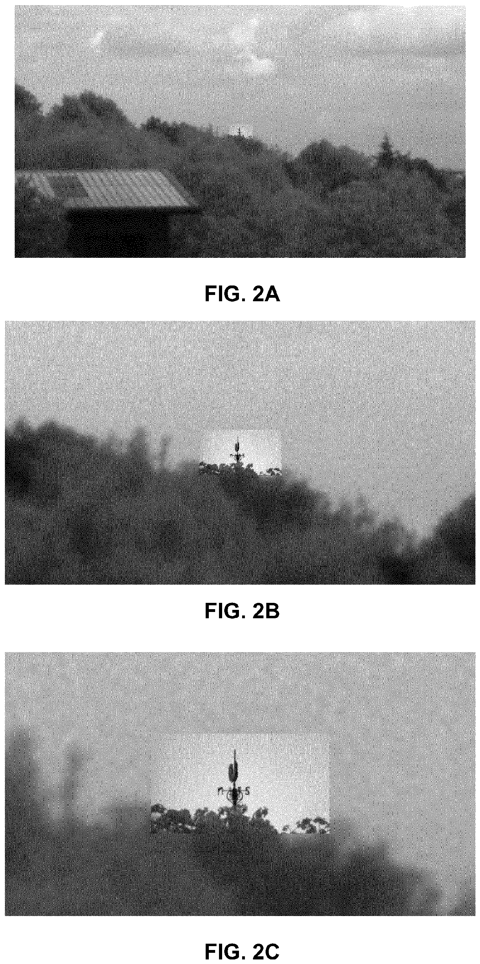

In use the wide-angle imaging data of the first camera 10, 11 and the narrow field of view imaging data of the second camera 12, 14, 15, 16 are arranged to be provided to the processing element 18. The processing element 18 is arranged to combine the two imaging streams, creating combined image data that provides vision of a wide area but with a desired region in high-resolution. In the preferred embodiment the processing element 18 is enabled to crop and scale the two image feeds, either prior to or after combination, in order to provide a digital foveal zoom functionality. Preferred examples of this progressive digital foveal zoom can be seen in the iteratively zoomed images provided in Figure 2a-c.

The combination of the two image data streams in this way provides for ease of location of a desired entity, whereby as can be seen from Figure 2a-c, the high-resolution image is placed in the wider context of its surroundings to enable easier location. The combination of the high quality image from the second camera 12, 14, 15, 16 with what may optionally be a lower quality image from the first camera 10, 11 provides for lower complexity of the resulting image data, the processing of which is less computationally intensive than if the image data comprised solely the high quality image data provided by the second camera 12, 14, 15, 16.

The coaxial alignment of the first camera 10, 11 and the second camera 12, 14, 15, 16 requires a small housing 20 and only a single imaging aperture 22. The incorporation of the processing element 18 within the housing 20, wherein the processing element 18 is enabled to combine, crop and scale the images without the use of additional hardware, means that the apparatus comprised within the housing 20 performs all of the necessary steps to yield effective coaxial digital foveal zoom capabilities. The combination of a small housing 20 with no additionally required hardware provides for a smaller form-factor apparatus 25 than would be required if the first camera 10, 11 and the second camera 12, 14, 15, 16 where not coaxially aligned, or if further hardware was required for combination, cropping and scaling of the two image feeds.

The presence of only a single imaging aperture 22 means that, where stealth is a concern, there is only a single reflective surface potentially providing glare. The absence of moving parts in the zooming and capturing of an image means that sound and heat emission from the apparatus can be kept to a minimum.

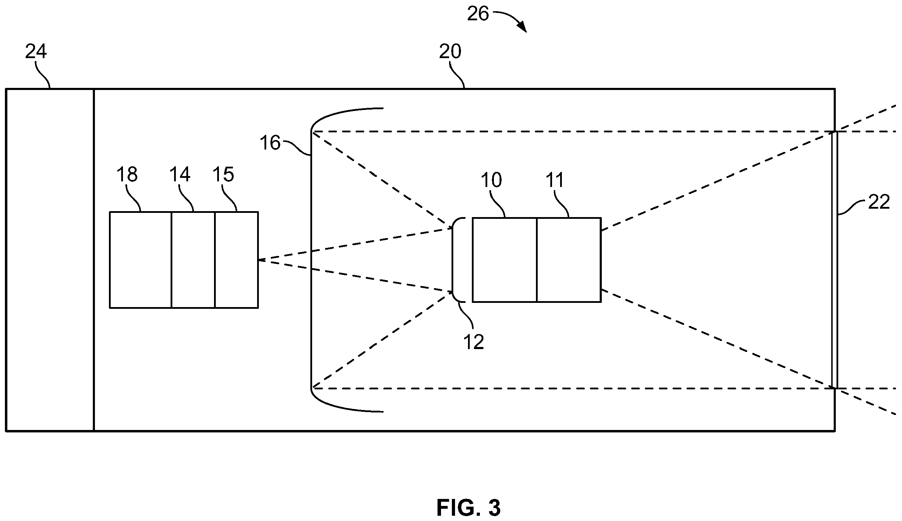

An optional embodiment 26 is shown in Figure 3 wherein the apparatus 25 from the embodiment described in Figure 1 further comprises a display means 24 adjacent to the housing 20. In this optional embodiment 26, the processing element 18 is arranged to transmit image data to the display means 24, arranged to display the transmitted data.

In a further optional embodiment, the processing portion 18 utilises connection to a network in order to transmit and receive image data. This transmission or receipt of image data to or from a network may optionally be prior to the combination, cropping or scaling of the image data. In optional embodiments comprising a display means 24, this transmission or receipt of image data to or from a network by the processing portion 18 may optionally be prior to transmission of the image data to the display means 24.

Optional embodiments are conceivable wherein the coaxial arrangement of more than two cameras is preferable, or wherein more than a single display means is preferable. There are further conceivable embodiments wherein the housing comprises further apertures arranged, for instance, for cooling of the apparatus within the housing. In further alternative embodiments the apparatus may comprise and process two or more video or image streams. The image processing could alternatively be a function of the display means. Optional further embodiments may provide the processing element as comprised within one or more cameras. Additional conceivable embodiments may comprise more than one processing element.

It will be appreciated that the above described embodiments are given by way of example only and that various modifications thereto may be made without departing from the scope of the invention as defined in the appended claims. For example visible light is discussed but aspects of the invention could be used with other light sources or other radiation on the electromagnetic spectrum, such as infrared.

## Claims

1. A long-range viewing apparatus comprising,
a housing;
a first camera within the housing;
a second camera within the housing;
and a processing element;
wherein the processing element is arranged to combine images from the first and second cameras;
wherein the processing element is further arranged to scale images from the first and second cameras;
wherein the processing element is further arranged to crop images from the first and second cameras;
**characterised in that**,
the first camera is positioned coaxially in front of the second camera; and
the housing comprises a single imaging aperture.

2. A long-range viewing apparatus according to claim 1, wherein the first camera comprises a first camera lens assembly and a first camera sensor.

3. A long-range viewing apparatus according to claim 1 or 2, wherein the second camera comprises a second camera lens assembly, a second camera sensor and at least one mirror.

4. A long-range viewing apparatus according to any preceding claim, wherein the combination of images from the first and second cameras by the processing element provides a composite foveal image.

5. A long-range viewing apparatus according to any preceding claim, wherein the first camera is a wide field of view camera.

6. A long-range viewing apparatus according to any preceding claim, wherein the second camera is a narrow field of view camera.

7. A long-range viewing apparatus according to any preceding claim, wherein the scaling and cropping of images by the processing element provides digital zoom capability without internally moving parts.

8. A long-range viewing apparatus according to any preceding claim, wherein the apparatus further comprises a display means enabled to receive and display image data.

9. A long-range viewing apparatus according to claim 8, wherein the processing element is further arranged to output image data to the display means.

10. A long-range viewing apparatus according to claim 8 or claim 9 wherein the display means is further arranged to carry out image processing.

11. A long-range viewing apparatus according to any preceding claim, wherein the processing element is further arranged to transmit and receive image data across at least one network.
